## Europäisches Patentamt

# European Patent Office

## Office européen des brevets

(11) Veröffentlichungsnummer: **0 260 253**
**B1**

(12) # EUROPÄISCHE PATENTSCHRIFT

(45) Veröffentlichungstag der Patentschrift:
**14.12.88**

(51) Int. Cl.⁴: **H 02 K 49/04**

(21) Anmeldenummer: **85903972.9**

(22) Anmeldetag: **31.07.85**

(86) Internationale Anmeldenummer:
**PCT/AT 85/00020**

(87) Internationale Veröffentlichungsnummer:
**WO 87/00988 (12.02.87 Gazette 87/04)**

(54) **WIRBELSTROMBREMSE FÜR KRAFTFAHRZEUGE.**

(43) Veröffentlichungstag der Anmeldung:
**23.03.88 Patentblatt 88/12**

(45) Bekanntmachung des Hinweises auf die Patenterteilung:
**14.12.88 Patentblatt 88/50**

(84) Benannte Vertragsstaaten:
**AT BE CH DE FR GB IT LI LU NL SE**

(56) Entgegenhaltungen:
**FR-A-1 258 803**
**FR-A-1 456 783**
**FR-A-1 573 051**
**FR-A-2 044 114**
**FR-A-2 102 600**
**FR-A-2 217 852**
**GB-A-2 140 978**

(73) Patentinhaber: **BERGER, Johann, Innsbrucker Strasse 43, A-6300 Wörgl (AT)**

(72) Erfinder: **SEIWALD, Andreas, Anichstrasse 5, A-6300 Wörgl (AT)**

(74) Vertreter: **Torggler, Paul, Dr., Patentanwälte Dr. Paul Torggler Dr. Engelbert Hofinger Wilhelm-Greil- Strasse 16, A-6020 Innsbruck (AT)**

LIBER, STOCKHOLM 1988

## Beschreibung

Die Erfindung betrifft eine Wirbelstrombremse für Kraftfahrzeuge zum Einbau in die Antriebswelle, insbesondere Kardanwelle, mit einem Gehäuse als Träger zweier Kränze von Magnetspulen, die parallel zur in einer Gehäusenabe gelagerten Bremswelle an beiden Seiten des Trägers vorgesehen sind, und mit einem Rotor, der aus zwei beidseitig an die Magnetspulen angenäherten, auf der Bremswelle befestigten Scheiben besteht, von denen jede aus miteinander verbundenen Teilen besteht, wobei ein den Magnetspulen zugewandter Teil durch einen Ring aus Reineisen und ein von den Magnetspulen abgewandter Teil durch ein ringförmiges, mit lamellenartigen Speichen versehenes Lüfterrad aus einer Leichtmetallgußlegierung gebildet ist.

Eine derartige Wirbelstrombremse ist beispielsweise der FR-PS- 2 044 114 zu entnehmen. Insbesondere für Schwerfahrzeuge stellt eine Wirbelstrombremse eine wirkungsvolle, unabhängige Ergänzung des übrigen Bremssystems dar, und wird angebaut an das Schaltgetriebe oder als Teil der Kardanwelle, in den Antrieb eingesetzt. Werden die Magnetspulen erregt, so bauen sie Magnetfelder auf, die in dem sich drehenden Rotor virbelströme induzieren. Die wiederum von den virbelströmen aufgebauten Magnetfelder wirken mit denen der Magnetspulen zusammen, und bremsen den Rotor und damit die Antriebswelle der aus zwei verschiedenen Materialien bestehende Rotor weist im spulennahen Teil eine gute elektrische Leitfähigkeit, hoher Permeabilität und geringer magnetischer Remanenz auf, der über eine Reihe von Schrauben mit einem zweiten Teil aus amagnetischem Material und einem dritten Teil aus einem gut wärmeleitenden, maßgenau verarbeitbaren und preisgünstigen Material verbunden ist. Der mehrteilige Aufbau verbessert die Eigenschaften und reduziert das Gewicht der Rotorscheiben, die zuvor (DE-PS- 955 969) aus Gußeisen hergestellt wurden. Die aus der FR-PS- 2 044 114 bekannte Verbindung mittels eines Kranzes von Schraubbolzen stellt nun keine befriedigende Lösung, da die Verbindung auf mehrere Punkte beschränkt ist.

Die Aufgabe der Erfindung liegt daher darin, Verbesserungen hinsichtlich der Verbindung der einzelnen Teile der Rotorscheiben zu erzielen.

Erfindungsgemäß wird dies dadurch gelöst, daß der Reineisenring an der zum Lüfterrad weisenden Seite eine Ringnut und das Lüfterrad einen der Ringnut entsprechenden Ringsteg aufweist, und daß sowohl die Ringnut als auch der Ringsteg mit korrespondierenden Gewinden an ihren achsparallelen Seitenwänden versehen sind, sodaß der Reineisenring auf das Lüfterrad aufschraubbar ist.

Die Gewindeanordnung wird dabei im Hinblick auf die Drehrichtung des Rotors ausgewählt, um ein selbsttätiges Lösen der beiden Teile zu vermeiden. Die direkte Verschraubung über das doppelte Gewinde führt zu einer festen, praktisch vollflächigen Verbindung der beiden Teile der Rotorscheiben.

Insbesondere besteht der Ring jeder Rotorscheibe aus Reineisen der Sorte RSE 80 1. 1014 nach DIN 17405 und das Lüfterrad aus einer Aluminiumgußlegierung der Sorte G-AlSi10Mgwa. gehärtet, da diese auch bei starken thermischen Beanspruchungen keine fuktionsstörende Verformung oder Risse erhält. Diese Materialauswahl stellt somit eine besonders vorteilhafte Kombination dar.

In einer bevorzugten Ausführung ist weiters vorgesehen, daß die zu den Polschuhen weisende Fläche des Ringes eine Kegelfläche bildet, deren Erzeugende zu einer Radialebene des Rotors einen Winkel von maximal 2°, vorzugsweise von 30' und die zum Lüfterrad weisende Bodenfläche der Ringnut eine Kegelfläche bildet, deren Erzeugende zu einer Radialebene des Rotors einen Winkel von maximal 5°, vorzugsweise 3°30' einschließt, wobei der Luftspalt zu den Polschuhen parallel verläuft und das bremsenwellennahe Gewindepaar des Ringes und des Lüfterrades zumindest um einen Gewindegang mehr aufweist als das umfangsnahe.

Für den Ein- und Ausbau der Wirbelstrombremse in die Kardanwelle ist es weiters günstig, wenn diese nach Lösung der Wellenverbindung seitlich, also senkrecht zur Kardanwelle abgenommen werden kann.

Auch hierfür wirkt sich die direkte Verschraubung des Reineisenringes mit dem Lüfterrad vorteilhaft aus, da durch einen großen Freiraum im Inneren in einer Ausführung das ringförmige Lüfterrad einen inneren Montageringteil für die Verbindung mit der auf der Bremswelle befestigten Rotornabe aufweisen kann. Bei dieser Ausführung ist dann bevorzugt vorgesehen, daß jede der beiden Rotornaben gegenüber dem Lüfterrad axial versetzt innerhalb des Ringes aus Reineisen auf der Bremswelle befestigt ist, wobei der Montageringteil des Lüfterrades mittels achsparallel sich erstreckender Befestigungselemente im peripheren Bereich der Rotornabe fixiert ist, und zwischen dem Lüfterrad und der Bremswelle an beiden Seiten ein axial einseitig offener Ringraum ausgebildet ist.

Weiters ist es in einfacher Weise möglich, den Luftspalt zwischen den Rotorscheiben und dem Ring einzustellen, wenn zwischen dem Montageringteil und der Rotornabe ein in der axialen Erstreckung einstellbarer Distanzring vorgesehen ist.

In einer weiteren Ausführung ist schließlich noch vorgesehen, daß im axial offenen Ringraum innerhalb des Lüfterrades an der Rotornabe ein Kupplungsflansch für die Verbindung mit der Fahrzeugantriebswelle befestigt ist, dessen Durchmesser kleiner als der des axial offenen Ringraumes ist, und der im peripheren, Durchtrittsbohrungen aufweisenden Bereich von der Rotornabe axial distanziert ist, wobei den Durchtrittsbohrungen im Zwischenraum zwischen dem Kupplungsflansch und der Rotornabe Verbindungselemente der Wellenverbindung verdrehfest zugeordnet sind. Somit ist, da die axiale Einbaulänge beschränkt ist, wenn die Fahrzeuggesamtkonzeption nicht geändert werden soll, jeweils ein Teil der beiden Wellenverbindungen innerhalb der Wirbelstrombremse untergebracht.

Für die Wellenverbindung sind vorzugsweise achsparallel verschiebbare Schraubbolzen vorgesehen, deren im Zwischenraum liegende Köpfe verdrehfest gehalten sind. Da für den seitlichen Ein- und Ausbau der Wirbelstrombremse die Schraubbolzen im Zwischenraum völlig versenkt werden müssen, ist für die Herstellung der Wellenverbindung nach dem Einbau deren Rückholung erforderlich. Hiezu sieht eine weitere Ausführung vor, daß im Zwischenraum ein axial verschiebbarer Topf angeordnet ist, der den Spalt zwischen dem Kupplungsflansch und dem Lüfterrad durchsetzende und von außen radial abstehende, ergreifbare Fortsätze aufweist, wobei die axiale Verschiebung des Topfes alle Köpfe der Schraubbolzen zumindest in der von der Gehäusenabe wegführenden Richtung beaufschlagt.

Erfolgt die Schraubenkopfbeaufschlagung in beiden Richtungen, so wird auch die gleichzeitige Versenkung aller Schrauben bei der Demontage erreicht.

Nachstehend wird nun die Erfindung anhand der Figuren der beiliegenden Zeichnung näher beschrieben, ohne darauf beschränkt zu sein.

Es zeigen:
Fig. 1 eine Asicht einer zwischen Längsträgern eines Fahrzeuges montierten Wirbelstrombremse,
Fig. 2 einen Axialschnitt gemäß der Linie II - II der Fig. 1,
Fig. 3 vergrößert im Detail die Anordnung der Rotornabe und des Kupplungsflansches, und
Fig. 4 den Aufbau einer Rotorscheibe in bevorzugter Ausführung.

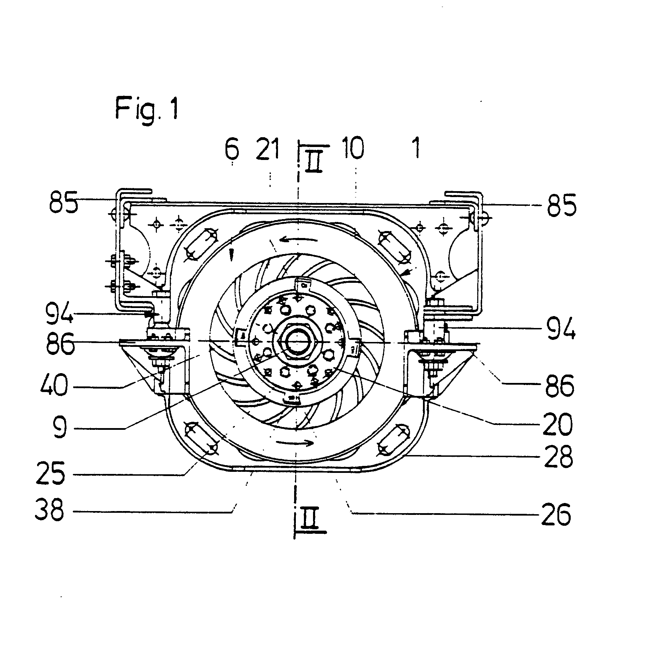

Eine zum Einbau in eine Kardanwelle vorgesehene Wirbelstrombremse weist ein Gehäuse 1 auf, das als Träger für die einzelnen Magnetspulen 3 dient. Das Gehäuse 1 besteht aus einer Leichtmetallegierung, insbesondere Aluminiumgußlegierung, und bildet im Inneren eine Gehäusenabe 5, in der ein als Bremswelle 9 mit der Achse 92 dienendes Wellenstück in Lagern 41 gelagert ist. Von der Gehäusenabe 5 erstreckt sich in einer Radialebene ein ringförmiger Steg 27, der einen Kranz von Öffnungen aufweist, und als äußerster Gehäuseabschnitt ist parallel zur Nabe ein im wesentlichen zylindrischer bzw. viereckiger Abdeckflansch 28 am ringförmigen Steg 27 angeformt. Der Abdeckflansch 28 ist an einander gegenüberliegenden Seiten mit Montageplatten versehen, die in der Einbaustellung sich vertikal erstrecken, und an denen Tragkonsolen 86 einstellbar fixiert sind. Die Tragkonsolen 86 sind mit Hilfe von Befestigungselementen 94 an Längsträgern 85 des Fahrzeugrahmens fixiert (Fig. 1).

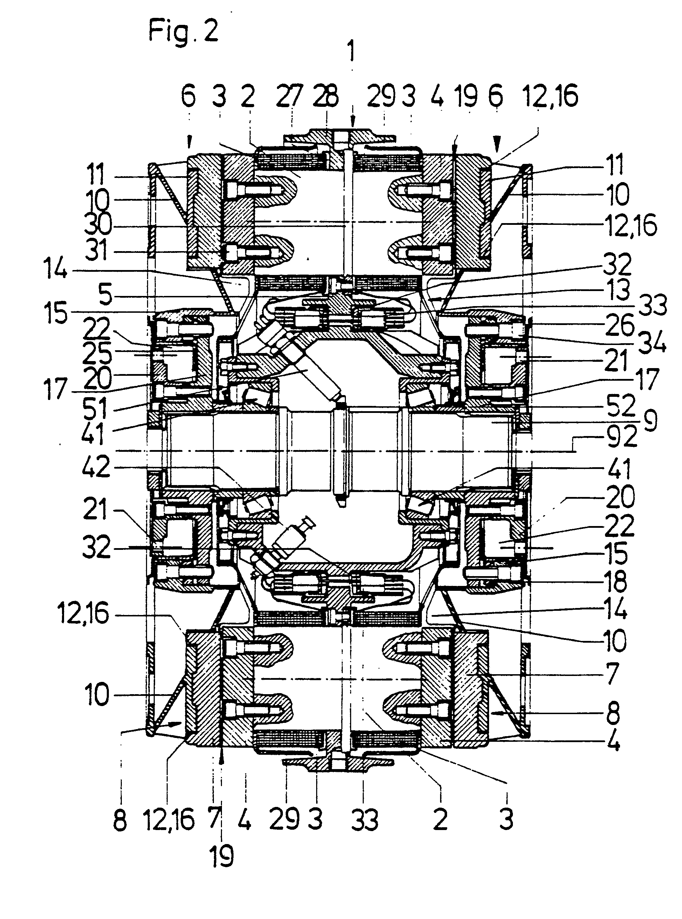

Wie aus Fig. 2 ersichtlich, liegt das Gehäuse 1 symmetrisch in einer mittleren Radialebene der Wirbelstrombremse. Die Öffnungen im ringförmigen Steg 27 werden von Spulenkernen 2 durchsetzt, die eine Ringschulter 30 aufweisen, die entlang des Öffnungsrandes am Steg 27 anliegt. Die Ringschulter 30 des Spulenkernes 2 ist mit dem Steg 27 im Bereich seines Öffnungsrandes verschraubt. Beidseitig des Steges 27 ist auf die Spulenkerne 2 je eine Magnetspule 3 aufgeschoben und eine aus Kunststoff, beispielsweise PVC, oder aus schwarz eloxiertem Aluminiumblech gebildete Schutzhaube 29, die pro Kern 2 eine Öffnung aufweist, überdeckt die Stirnseite der Magnetspulen 3. Mittels Befestigungsschrauben 31 sind anden Kernen 2 stirnseitig Polschuhe 4 fixiert, die gleichzeitig die Schutzhaube 29 an den Magnetspulen 3 anliegend festhalten. Beim Übergang des Steges 27 des Gehäuses 1 zur Gehäusenabe 5 sind beidseitig Ringnuten 32 vorgesehen, in die elektrische Anschlußleitungen 33 mit Steckanschlüssen für die Magnetspulen eingelegt sind.

Das als Bremswelle 9 dienende Wellenstück ist beidseitig der Gehäusenabe 5 im Querschnitt unrund ausgebildet und trägt jeweils eine Rotornabe 17, an der eine Rotorscheibe 6 mittels Schrauben 34 befestigt ist. Jede Rotorscheibe 6 setzt sich aus zwei Teilen zusammen, von denen der unter Ausbildung eines Luftspaltes 19 an die Polschuhe 4 angenäherte Teil einen Ring 7 und der zweite ein Lüfterrad 8 mit lamellenartigen Speichen 10 darstellt. Der Ring 7 ist aus einem magnetisch weichen Material möglichst hoher Permeabilität, möglichst geringer Remanenz und guter elektrischer Leitfähigkeit gefertigt, und besteht demzufolge vorzugsweise aus Reineisen der Sorte RSE 80 1. 1014. Aus diesem Material sind bevorzugt auch die Spulenkerne 2 gebildet. Der zweite Teil jeder Rotorscheibe 6, also das Lüfterrad 8, ist aus einem Material geringen Gewichts, guter Verarbeitbarkeit und hoher thermischer und mechanischer Beanspruchbarkeit hergestellt, und besteht vorzugsweise aus einer Aluminiumgußlegierung der Sorte G-AlSi10Mgwa. Jedes Lüfterrad 8 ist im wesentlichen doppelwandig ausgebildet, wobei die lamellenartigen Speichen 10 gekrümmt und schräg zwischen den beiden Wandungen verlaufen. Vorzugsweise beträgt deren Krümmungsradius 140 mm und die Schrägneigung 45°. Die lamellenartigen Speichen 10 sind weiters mit in axialer Richtung sich in den Freiraum 13 innerhalb des Reineisenringes 7 und der Polschuhe 4 erstreckenden Fortsätzen 14 versehen. Die von den lamellenartigen Speichen 10 und den Wandungen eingeschlossenen Kanäle wälzen Kühlluft durch die Wirbelstrombremse und führen die entstehende Wärme nach außen ab. Die dem Reineisenring 7 zugewandte Wandung des Lüfterrades 8 bildet einen axial vorstehenden Ringsteg 11, an dessen beiden achsparallelen Seitenflächen Gewinde 16 vorgesehen sind, die in Umfangsrichtung an denselben Stellen beginnen und enden. Am Reineisenring 7 ist eine korrespondierende Nut ausgebildet, deren achsparallele Seitenflächen Gewinde 12 tragen, die zu den jeweiligen Gewinden 16 des Ringsteges 11 passen. Somit lassen sich die beiden Rotorteile jeder Rotorscheibe 6 miteinander verschrauben, wobei im Hinblick auf die Drehrichtung der Rotorscheiben 6 Links- und Rechtsgewinde so gewählt sind, daß eine selbsttätige Lockerung nicht möglich ist.

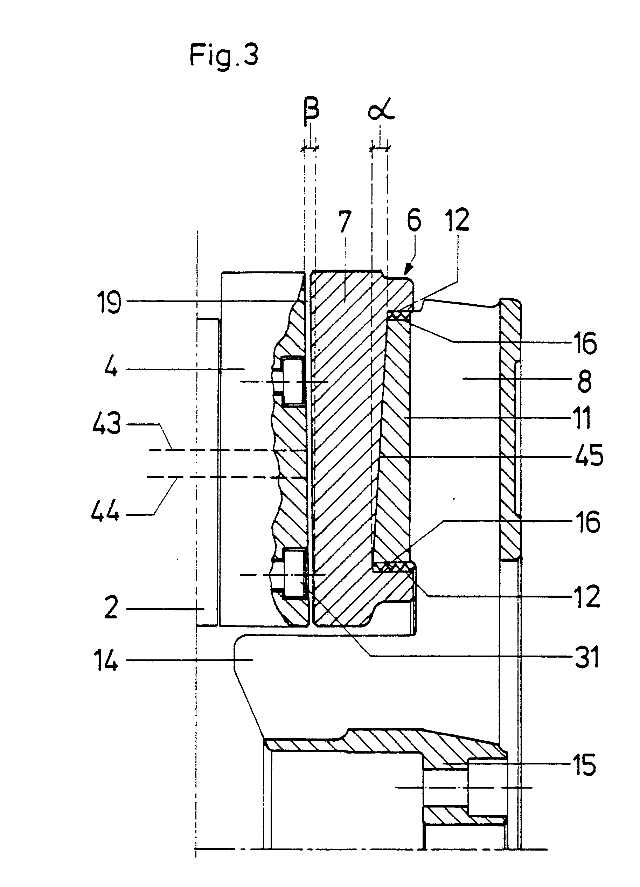

In Fig. 2 erstrecken sich die Seitenflächen des Reineisenringes 7, die Bodenfläche der Ringnut und die zugehörige Seitenfläche des Ringsteges 11 jeweils in Radialebene des Rotors. In der in Fig. 3 im Detail gezeigten bevorzugten Ausführung nimmt die Dicke des Ringes 7 radial nach außen zu. Die zu den Polschuhen 4 gewandte Seitenfläche des Reineisenringes 7 ist somit eine Kegelfläche, deren Erzeugende im Winkel $\beta$ von vorzugsweise 30' zur Radialebene geneigt ist, wobei, da der Luftspalt 19 parallel verläuft, die Polschuhe 4 bremswellennah dicker als umfangsnah ausgebildet sind, d.h. einen schräg geschnittenen Zylinder darstellen, soferne sie eine kreisförmige Grundfläche aufweisen. Dabei ist die Mittelachse 43 des Polschuhs 4 zur Achse 44 des Spulenkernes 2 nach außen versetzt. Weiters ist die Bodenfläche der Ringnut ebenfalls eine Kegelfläche, deren Erzeugende mit einer Radialebene den Winkel $\alpha$ von vorzugsweise 3° 30' einschließt. Da der Ringsteg 11 des Lüfterrades 8 korrespondierend ausgebildet ist, d.h. die Ringnut des Reineisenringes 7 vollständig ausfüllt, weist das bremswellennahe Gewindepaar 12, 16 ein bis zwei Gewindegänge mehr auf. Dies erleichtert überdies das Verschrauben des Lüfterrades 8 mit dem Reineisenring7, im dem sich das induzierte Magnetfeld so weit als möglich nach außen verlagert, wodurch sich eine Vergrößerung des Bremsdrehmomentes und damit des Wirkungsgrades, sowie im bremswellennahen Bereich eine Verringerung der Wärmeentwicklung und damit verbesserte Wärmeabfuhr einstellt.

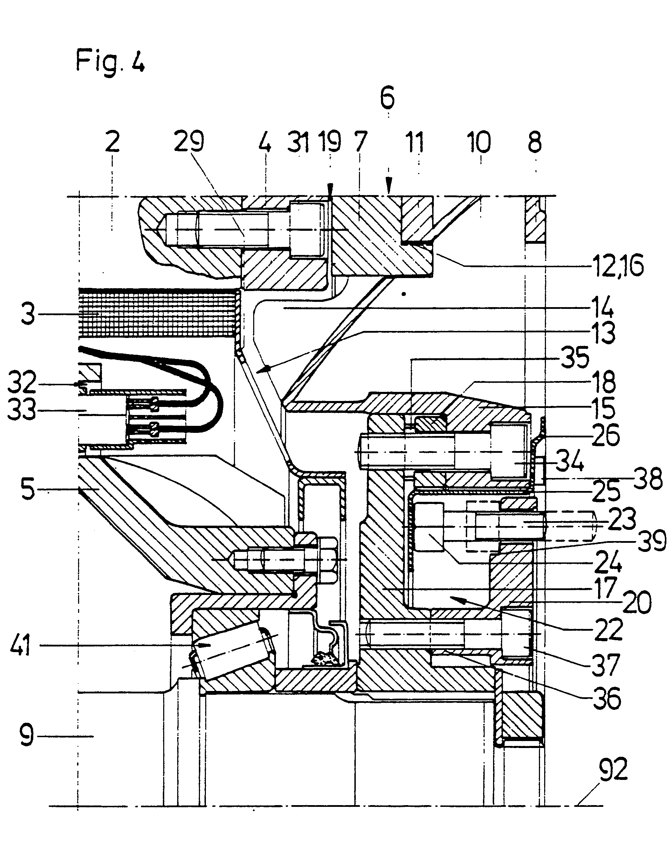

Das Lüfterrad 8 stellt im wesentlichen ebenfalls eine Ringscheibe dar, deren wellennächster Bereich innerhalb der Speichen 10 einen Montageringteil 15 bildet. Dieser dient zur Befestigung an der Rotornabe 17, die gegenüber dem Lüfterrad 8 axial zur Gehäusenabe 5 hin versetzt im wesentlichen innerhalb des Reineisenringes 7 der Rotorscheibe 6 angeordnet ist. Dadurch entsteht innerhalb des ringförmigen Lüfterrades ein nach außen offener Ringraum und ein Kranz von als Befestigungselementen dienenden Schrauben 34 verbindet den Montageringteil 15 des Lüfterrades 8 mit dem Randbereich der Rotornabe 17. Dabei kann der axiale Abstand zwischen dem Montageringteil 15 und der Rotornabe 17 durch Stellschrauben 35 festgelegt werden, die in einem zwischen dem Montageringteil 15 und die Rotornabe 17 eingelegten Distanzring 18 angeordnet sind (Fig. 4). Die Einstellung dieses axialen Abstandes legt den Luftspalt 19 zwischen dem Reineisenring 7 den Polschuhen 4 fest. Für die Wellenverbindung zwischen der Bremswelle 9 und den beidseitig anschließenden Abschnitten der Kardanwelle bzw. Antriebswelle ist jeweils ein Kupplungsflansch 20 vorgesehen, der einen hülsenartigen axialen Fortsatz 35 aufweist. Der Kupplungsflansch 20 fluchtet dabei mit seiner Außenseite im wesentlichen mit der Außenseite des Lüfterrades 8 der Rotorscheibe 6, erstreckt sich also in den axial offenen Ringraum innerhalb des Lüfterrades 8, wobei der hülsenartige Fortsatz 36 an der Rotornabe 17 anliegt. An dieser ist der Kupplungsflansch 20 mittels achsparalleler Schrauben 37 fixiert, sodaß über den Formschluß der Rotornabe 17 mit der Bremswelle 9 die verdrehfeste Verbindung der Rotorscheiben 6 mit der angekuppelten Kardan- bzw. Antriebswelle hergestellt ist. Auf Grund des hülsenartigen Fortsatzes 36 verbleibt zwischen der Rotornabe 17 und dem Kupplungsflansch 20 von dem axial offenen Ringraum ein Zwischenraum 22, in dem ein axial verschiebbarer Topf 25 angeordnet ist. Der Durchmesser des Kupplungsflansches 20 ist kleiner als der Innendurchmesser des innerhalb des Lüfterrades 8 gebildeten Ringraumes, und durch den zwischen dem Kupplungsflansch 20 und dem Lüfterrad 8 verbleibenden Ringspalt erstreckt sich die Wandung des Topfes 25 nach außen. An der Außenseite des Lüfterrades erstreckt sich ein Randbereich der Wandung in einer Radialebene, aus der hintergreifbare, periphere Fortsätze 26 abstehen.

Für die Wellenverbindung weist der Kupplungsflansch 20 einen Kranz von in den Zwischenraum 22 führenden Bohrungen 21 auf (Fig. 2). In diesen Bohrungen sind Schraubbolzen 23 axial verschiebbar angeordnet, wobei deren Kopf 24 im Zwischenraum 22 liegt, die Schraubbolzen 23 also unverlierbar gehalten sind. Um nun die Wellenverbindung beim Einbau der Wirbelstrombremse herzustellen, werden alle Schraubbolzen 23 nach innen geschoben (Fig. 4), sodaß ihre freien Enden innerhalb der Außenseite des Lüfterrades 8 liegen und die Köpfe 24 der Schraubbolzen am Boden des Topfes 25 anliegen. Nachdem die Wirbelstrombremse in die Einbaulage gebracht worden ist, und durch Drehen der Rotorscheibe 6 die Übereinstimmung der Bohrungen 21 mit entsprechenden Bohrungen des anderen Kupplungsflansches an der Kardanwelle bzw. Antriebswelle hergestellt ist, wird der Topf 25 an den zugänglichen Fortsätzen 26 ergriffen, und in axialer Richtung nach außen gezogen. Dabei treten die Schraubbolzen 23 durch den Kupplungsflansch der Kardan- oder Antriebswelle, sodaß entsprechende Muttern aufgezogen werden können. Eine verdrehfeste Halterung der Köpfe 24 kann dabei bereits am Boden des Topfes 25 gegeben sein, in jedem Fall wird diese durch Rastauflagen 39 am Kupplungsflansch 20 erzielt, an denen die Köpfe 24 zur Anlage kommen (strichlierte Darstellung in Fig. 4).

Sobald die Wellenverbindung hergestellt ist, kann der Topf 25 wieder in seine innere Position zurückgeschoben und dort fixiert werden. Hiezu dienen Schlitze 40 in den Fortsätzen 26 und Befestigungsschrauben 38, die im Montageringteil 15 des Lüfterrades 8 vorgesehen sind. Wie aus Fig. 1 ersichtlich, verlaufen die Schlitze 40 umfangsparallel und enden in einer Erweiterung, die den Durchtritt des Kopfes der Schraube 38 gestattet. Sobald die Köpfe der Schrauben 38 durch die Erweiterungen durchgetreten sind, wird der Topf 25 geringfügig verdreht, sodaß die Schäfte der Schrauben 38 in den schmäleren Teil der Schlitze 40 eintreten und anschließend werden die Schrauben 38 festgezogen.

Im übrigen ist die beschriebene Art der Rotornabe und Kupplungsflanschausbildung und -anordnung nicht auf die Ausbildung der zweigeteilten Rotorscheibe beschränkt, sondern könnte beispielsweise auch bei herkömmlichen Gußeisenrotorscheiben eingesetzt werden.

Die Gehäusenabe 5, in der die beiden Bremswellenlager 41, insbesondere Kegelrollenlager, mit größtmöglicher axialer Distanz angeordnet sind, umschließt einen Hohlraum, der mit Getriebeöl zur Lagerschmierung teilgefüllt ist. Dieses kann über nicht gezeigte Kanäle im Gehäuse 1 zugeführt bzw. abgeführt werden. In der in der Einbaustellung unteren Hälfte der Gehäusenabe 5 ist ein Ölstandgeber 42 eingesetzt. Weiters befindet sich in der Gehäusenabe 5 ein Teil einer Blockierschutzeinrichtung, der als induktiver Geber 51 schräg zur Bremswelle 9 in der Gehäusenabe 5 befestigt ist. Der induktive Geber 51 tastet ein auf der Bremswelle 9 angeordnetes Stirnzahnrad 52 ab, und gibt die ermittelte Drehzahl an eine Steuerelektronik weiter, die die Erregerspannung der Magnetspulen 3 steuert. Dadurch wird die Blockierung des Antriebs und damit der angetriebenen Räder bei verringerter Bodenhaftung vermieden, da die Bremswirkung mit Reduzierung der Erregerspannung verringert wird. Die Steuerelektronik bzw. die Wirkungsweise der Blockierschutzeinrichtung lehnt sich dabei an jene an, die für den Blockierschutz der einzelnen Räder von Kraftfahrzeugen bekannt sind.

**Patentansprüche**

1. Wirbelstrombremse für Kraftfahrzeuge zum Einbau in die Antriebswelle, insbesondere Kardanwelle, mit einem Gehäuse (1) als Träger zweier Kränze von Magnetspulen (3), die parallel zur in einer Gehäusenabe (5) gelagerten Bremswelle (9) an beiden Seiten des Trägers vorgesehen sind, und mit einem Rotor, der aus zwei beidseitig an die Magnetspulen (3) angenäherten, auf der Bremswelle (9) befestigten Scheiben (6) besteht, von denen jede aus miteinander verbundenen Teilen besteht, wobei ein den Magnetspulen (3) zugewandter Teil durch einen Ring (7) aus Reineisen und ein von den Magnetspulen (3) abgewandter Teil durch ein ringförmiges, mit lamellenartigen Speichen (10) versehenes Lüfterrad (8) aus einer Leichtmetallgußlegierung gebildet ist, dadurch gekennzeichnet, daß der Reineisenring (7) an der zum Lüfterrad (8) weisenden Seite eine Ringnut und das Lüfterrad (8) einen der Ringnut entsprechenden Ringsteg (11) aufweist, und daß sowohl die Ringnut als auch der Ringsteg (11) mit korrespondierenden Gewinden (12, 16) an ihren achsparallelen Seitenwänden versehen sind, sodaß der Reineisenring (7) auf das Lüfterrad (8) aufschraubbar ist.

2. Wirbelstrombremse nach Anspruch 1, dadurch gekennzeichnet, daß das Lüfterrad (8) einen inneren Montageringteil (15) für die Verbindung mit der auf der Bremswelle (9) befestigten Rotornabe (17) aufweist.

3. Wirbelstrombremse nach Anspruch 2, dadurch gekennzeichnet, daß jede der beiden Rotornaben (17) gegenüber dem Lüfterrad (8) axial versetzt innerhalb des Reineisenringes (7) aus magnetisch weichem Material auf der Bremswelle (9) befestigt ist, wobei der Montageringteil (15) des Lüfterrades (8) mittels achsparallel sich erstreckender Befestigungselemente im peripheren Bereich der Rotornabe (17) fixiert ist, und zwischen dem Lüfterrad (8) und der Bremswelle (9) an beiden Seiten ein axial einseitig offener Ringraum ausgebildet ist.

4. Wirbelstrombremse nach Anspruch 3, dadurch gekennzeichnet, daß zwischen dem Montageringteil (15) und der Rotornabe (17) ein in der axialen Erstreckung einstellbarer Distanzring (18) vorgesehen ist, der den Luftspalt (19) zwischen den Polschuhen (4) und dem Reineisenring (7) festlegt.

5. Wirbelstrombremse nach Anspruch 3, dadurch gekennzeichnet, daß im axial offenen Ringraum innerhalb des Lüfterrades (8) an der Rotornabe (17) ein Kupplungsflansch (20) für die Verbindung mit der Fahrzeugantriebswelle befestigt ist, dessen Durchmesser kleiner als der des axial offenen Ringraumes ist, und der im peripheren, Durchtrittsbohrungen (21) aufweisenden Bereich von der Rotornabe (17) axial distanziert ist, wobei den Durchtrittsbohrungen (21) im Zwischenraum (22) zwischen dem Kupplungsflansch (20) und der Rotornabe (17) Verbindungselemente der Wellenverbindung verdrehfest zugeordnet sind.

6. Wirbelstrombremse nach Anspruch 5, dadurch gekennzeichnet, daß als Verbindungselemente achsparallel verschiebbar Schraubbolzen (23) vorgesehen sind, deren im Zwischenraum (22) liegende Köpfe (24) verdrehfest gehalten sind.

7. Wirbelstrombremse nach Anspruch 6, dadurch gekennzeicnet, daß im Zwischenraum (22) ein axial Verschiebbarer Topf (25) angeordnet ist, der den Spalt zwischen dem Kupplungsflansch (20) und dem Lüfterrad (8) durchsetzende und von außen radial abstehende, ergreifbare Fortsätze (26) aufweist, wobei die axiale Verschiebung des Topfes (25) alle Köpfe (24) der Schraubbolzen (23) zumindest in der von der Gehäusenabe (5) wegführenden Richtung beaufschlagt.

8. Wirbelstrombremse nach Anspruch 1, dadurch gekennzeichet, daß die Dicke des Reineisenringes (7) radial zunimmt.

9. Wirbelstrombremse nach Anspruch 8, dadurch gekennzeichnet, daß die zu den Polschuhen (4) weisende Fläche des Ringes (7) eine Kegelfläche bildet, deren Erzeugende zu einer Radialebene des Rotors einen Winkel (β) von maximal 2°, vorzugsweise von 30', und die zum Lüfterrad weisende Bodenfläche (45) der Ringnut eine Kegelfläche bildet, deren Erzeugende zu einer Radialebene des Rotors einen Winkel (α) von maximal 5°, vorzugsweise 3°30' einschließt, wobei der Luftspalt (19) zu den Polschuhen (4) parallel verläuft und das bremswellennahe Gewindepaar (12, 16) des Ringes (7) und des Lüfterrades (8) zumindest um einen Gewindegang mehr aufweist als das umfangsnahe.

## Claims

1. An eddy current brake for motor vehicles for incorporation into the drive line, in particular a universally jointed shaft, comprising a housing (1) as a carrier for two rings of magnetic coils (3) which are provided parallel to a brake shaft (9) mounted in a housing boss (5), at both sides of the carrier, and a rotor which comprises two discs (6) which are fixed on the brake shaft (9) and which are disposed adjacent to the magnetic coils (3) on both sides, each of the discs (6) comprising interconnected portions, wherein a portion which is towards the magnetic coils (3) is formed by a ring (7) of pure iron and a portion which is remote from the magnetic coils (3) is formed by an annular fan wheel (8) which comprises a light metal casting alloy and which is provided with plate-like spokes (10) characterised in that the pure iron ring (7) has an annular groove at the side facing towards the fan wheel (8) and the fan wheel (8) has an annular web portion (11) corresponding to the annular groove, and that both the annular groove and the annular web portion (11) are provided with corresponding screwthreads (12, 16) at their side walls which are parallel to the axis, so that the pure iron ring (7) can be screwed on to the fan wheel (8).

2. An eddy current brake according to claim 1 characterised in that the fan wheel (8) has an inner mounting ring portion (15) for connection to the rotor hub (17) which is fixed on the brake shaft (9).

3. An eddy current brake according to claim 2 characterised in that each of the two rotor hubs (17) is fixed on the brake shaft (9) axially displaced relative to the fan wheel (8) within the pure iron ring (7), comprising magnetically soft material, wherein the mounting ring portion (15) of the fan wheel (8) is fixed by means of fixing elements which extend in parallel relationship to the axis, in the peripheral region of the rotor hub (17), and an annular space which is open axially at one side is provided between the fan wheel (8) and the brake shaft (9) at both sides.

4. An eddy current brake according to claim 3 characterised in that provided between the mounting ring portion (15) and the rotor hub (17) is a spacer ring (18) which is adjustable in axial extent and which fixes the air gap (19) between the pole shoes (4) and the pure iron ring (7).

5. An eddy current brake according to claim 3 characterised in that fixed in the axially open annular space within the fan wheel (8) on the rotor hub (17) is a coupling flange (20) for connection to the vehicle drive shaft, the diameter of the flange being less thah that of the axially open annular space, and the flange being axially spaced from the rotor hub (17) in the peripheral region which has passage bores (21), wherein connecting elements of the shaft connection are non-rotatably associated with the passage bores (21) in the intermediate space (22) between the coupling flange (20) and the rotor hub (17).

6. An eddy current brake according to claim 5 characterised in that screw bolts (23), displaceable parallel to the axis, are provided as connecting elements, wherein the heads (24) of the screw bolts, which are disposed in the intermediate space (22), are held non-rotatably.

7. An eddy current brake according to claim 6 characterised in that disposed in the intermediate space (22) is an axially displaceable cup (25) which has extension portions (26) which can be gripped and which pass through the gap between the coupling flange (20) and the fan wheel (8) and which project radially from the outside, wherein the axial displacement of the cup (25) acts upon all heads (24) of the screw bolts (23) at least in the direction leading away from the housing boss (5).

8. An eddy current brake according to claim 1 characterised in that the thickness of the pure iron ring (7) increases radially.

9. An eddy current brake according to claim 8 characterised in that the surface of the ring (7) which faces towards the pole shoes (4) forms a taper surface whose generatrix relative to a radial plane of the rotor forms an angle (β) of a maximum of 2°, preferably 30', and the bottom surface (45), which faces towards the fan wheel, of the annular groove forms a taper surface whose generatrix relative to a radial plane of the rotor includes an angle (α) of a maximum of 5°, preferably 3° 30′, wherein the air gap (19) extends parallel to the pole shoes (4) and the pair of screwthreads (12, 16), which are adjacent the brake shaft, on the ring (7) and the fan wheel (8) has at least one screwthread pitch more than the pair of screwthreads adjacent the periphery.

**Revendications**

1. Frein à courants de Foucault pour véhicules à moteur, destiné à être monté dans l'arbre d'entraînement, notamment l'arbre de cardan, comportant un boîtier (1) formant support de deux couronnes de bobines magnétiques (3), qui sont prévues des deux côtés du support parallèlement à l'arbre de frein (9) tourillonné dans un moyeu (5) du carter, et un rotor, constitué de deux disques (6) qui sont placés, des deux côtés, à proximité des bobines magnétiques (3) et sont fixés sur l'arbre de frein (9) et dont chacune est constituée par des éléments réunis entre eux, un élément tourné vers les bobines magnétiques (3) étant formé par un anneau (7) en fer pur et un élément tourné à l'opposé des bobines magnétiques (3) étant formé par une roue annulaire de ventilateur (8) équipée de rayons en forme de lamelles (10) et constituée en un alliage léger de fonderie, caractérisé en ce que l'anneau de fer pur (7) comporte une gorge annulaire sur sa face tournée vers la roue de ventilateur (8), et la roue de ventilateur (8) possède une barrette annulaire (11) correspondant à la gorge annulaire, et qu'aussi bien la gorge annulaire que la barrette annulaire (11) sont munies de filetages correspondants (12, 16) au niveau de leurs parois latérales parallèles à l'axe, de sorte que l'anneau de fer pur (7) peut être vissé sur la roue de ventilateur (8).

2. Frein à courants de Foucault selon la revendication 1, caractérisé en ce que la roue de ventilateur (8) possède un élément intérieur (15) formant bague de montage, destiné à établir la liaison avec le moyeu (17) du rotor, qui est fixé sur la paroi de frein (9).

3. Frein à courants de Foucault selon la revendication 2, caractérisé en ce que chacun des deux moyeux (17) du rotor est fixé sur l'arbre de frein (9) en étant décalé axialement à l'intérieur de l'anneau en fer pur (7) réalisé en un matériau magnétique doux, l'élément (15) formant bague de montage de la roue de ventilateur (8) étant fixé au moyen d'éléments de fixation s'étendant parallèlement à l'axe, dans la zone périphérique du moyeu (17) du rotor, et un espace annulaire ouvert axialement d'un côté étant formé des deux côtés entre la roue de ventilateur (8) et l'arbre de frein (9).

4. Frein à courants de Foucault selon la revendication 3, caractérisé en ce qu'entre l'élément (15) formant bague de montage et le moyeu (17) du rotor est prévue une bague-entretoise (18) dont l'étendue axiale est réglable et qui détermine l'entrefer (19) entre les pièces polaires (4) et l'anneau de fer pur (7).

5. Frein à courants de Foucault selon la revendication 3, caractérisé en ce qu'une bride d'accouplement (20) est fixée sur le moyeu (17) du rotor, dans l'espace annulaire ouvert axialement, à l'intérieur de la roue de ventilateur (8), bride qui est utilisée pour établir la liaison avec l'arbre d'entraînement du moteur et dont le diamètre est inférieur à celui de l'espace annulaire ouvert axialement et qui est séparée axialement du moyeu (17) du rotor dans la zone périphérique munie de perçages traversants (21), auquel cas des organes de raccordement de la liaison d'arbre étant associés, avec blocage en rotation, aux perçages traversants (21), dans l'espace intercalaire (22) prévu entre la bride d'accouplement (20) et le moyeu (17) du rotor.

6. Frein à courants de Foucault selon la revendication 5, caractérisé en ce qu'il est prévu, comme organes de raccordement, des boulons filetés (23) déplaçables parallèlement à l'axe et dont les têtes (24) situées dans l'espace intercalaire (22) sont maintenues en étant bloquées contre toute rotation.

7. Frein à courants de Foucault selon la revendication 6, caractérisé en ce que dans l'espace intercalaire (22) se trouve disposé un pot (25) déplaçable axialement, qui traverse la fente présente entre la bride d'accouplement (20) et la roue de ventilateur (8) et qui comporte des prolongements (26) faisant saillie radialement vers l'extérieur et pouvant être saisis, le déplacement axial du pot (25) chargeant toutes les têtes (24) des boulons filetés (23) au moins dans la direction s'écartant du moyeu (5) du carter.

8. Frein à courants de Foucault selon la revendication 1, caractérisé en ce que l'épaisseur de l'anneau de fer pur (7) augmente radialement.

9. Frein à courants de Foucault selon la revendication 8, caractérisé en ce que la surface de l'anneau (7), qui est tournée vers les pièces polaires (4), constitue une surface conique dont la génératrice fait un angle ($\beta$) égal au maximum à 2°, de préférence égal à 30′, par rapport au plan radial du rotor, et en ce que la surface (45), tournée vers la roue de ventilateur, du fond de la gorge annulaire constitue une surface conique dont la génératrice fait un angle ($\alpha$) égal au maximum à 5°, de préférence à 3° 30′, par rapport au plan radial du rotor, l'entrefer (19) s'étendant parallèlement aux pièces polaires (4), et le couple de filetages (12, 16), proche de l'arbre de frein, de l'anneau (7) et de la roue de ventilateur (8) possédant au moins une spire de filetage de plus qu'à proximité de la périphérie.

Fig. 1

6  21  II  10  1

85

85

94

86

40

9

25

38

94

86

20

28

26

II

# Fig. 2

Fig.3

Fig. 4